# FASCICULE DE BREVET EUROPEEN

(11) **EP 0 920 585 B1**
(45) Date de publication et mention de la délivrance du brevet: **30.10.2002**
(21) Numéro de dépôt: 97937627.4
(22) Date de dépôt: 14.08.1997
(51) Int. Cl.: F03D 3/04

(54) **TURBINE EOLIENNE A AXE VERTICAL DE FAIBLE HAUTEUR**
WINDTURBINE MIT SENKRECHTER DREHACHSE UND NIEDRIGER BAUHÖHE
WIND TURBINE WITH LOW VERTICAL AXIS

(30) Priorité: 23.08.1996 FR 9610537
(43) Date de publication de la demande: 09.06.1999
(73) Titulaire: GUAL, Georges, 83200 Toulon (FR)
(72) Inventeur: GUAL, Georges, 83200 Toulon (FR)
(74) Mandataire: Bentz, Jean-Paul
(86) Numéro de dépôt international: FR9701490
(87) Numéro de publication internationale: WO98007981

(56) Documents cités:
- EP-A- 0 522 994
- FR-A- 2 624 210
- GB-A- 2 049 066
- US-A- 2 169 149
- US-A- 4 047 834
- US-A- 4 142 822
- US-A- 4 362 470

## Description

L'invention concerne la structure d'un Module Stato-Eolien quadrimonolithique dont la conformation plate et l'ensemble des ailes directionnelles (4) périptères, permet l'interception de vents de toute direction et de toute puissance, sans régulation et sans recours à un quelconque système d'orientation.

Tous ces éléments forment ainsi un carénage de protection incluant une turbine à écoulement à double effet moteur (1) dans laquelle le caractère aérodynamique est conforté par une restructuration appropriée.

Selon l'état de la technique et d'après les brevets français n°81 14373 (FR-A-2 509 801), 83 20315 (FR-A-2 556 783) et 87 17256 (FR-A-2 624 210) relatifs à un module stato-éolien et à une turbine trifonctionnelle, tout appareil éolien engendre des turbulences et des vibrations néfastes au rendement et à la fiabilité. Par ailleurs, l'usinage et l'assemblage d'une multitude de pièces élémentaires réduisent considérablement la compétitivité du produit.

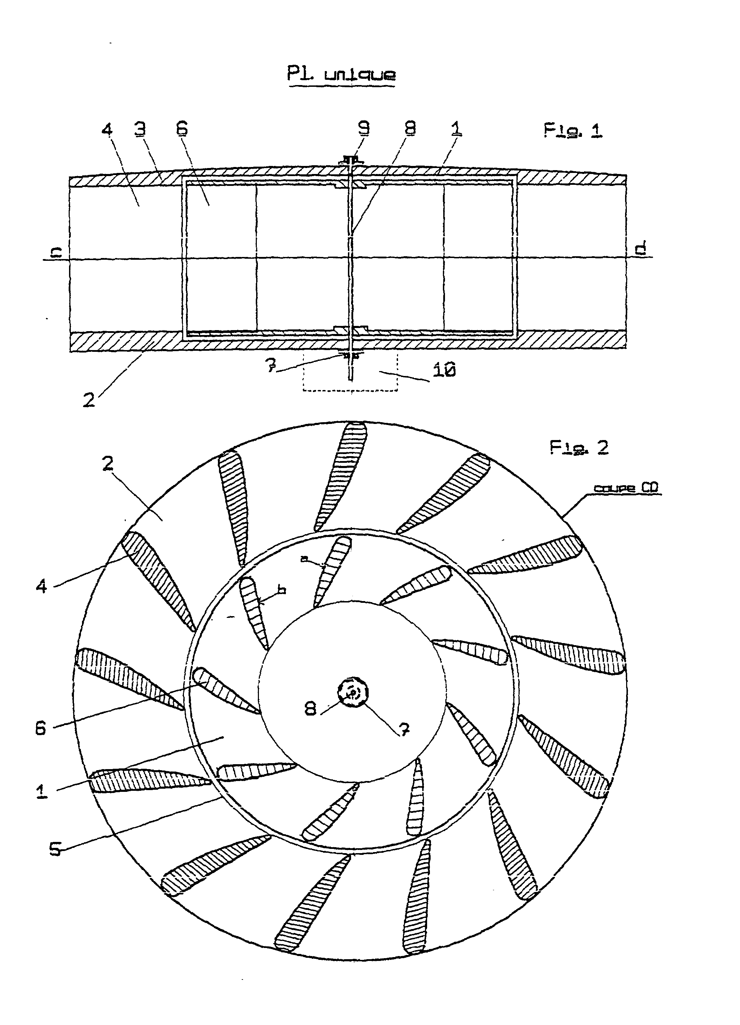

La présente invention a pour but de remédier à cet état de chose au moyen d'une restructuration globale caractérisée par un moulage en une seule opération de seulement quatre blocs monolithiques constituant une turbine à huit pales (1) dont le nombre peut varier, un socle (2), un capot plat circulaire légèrement bombé (3) et les ailettes directionnelles périptères à profil asymétrique dont le nombre peut également varier (4) (fig. 1).

Succinctement, l'invention prévoit un module capteur éolien dont la conception est réalisée par le moulage de quatre éléments complémentaires coulés d'une seule pièce, un capot de protection légèrement bombé 3, une turbine centrale 1, un socle 2 dont la périphérie est pourvue d'ailettes directionnelles périptères 4 à profil asymétrique afin d'accélérer et canaliser le flux éolien, caractérisé en ce que chaque ailette directionnelle périptère possède un profil asymétrique inversé par rapport au profil des pales 6 de la turbine 1 et en ce que chaque pale 6 de la turbine 1 possède de même un profil asymétrique s'inspirant de l'aile d'avion propice au double effet poussée et traînée dont la résultante est appliquée sur les pales de la turbine centrale provoquant sa rotation sur le plan horizontal.

L'invention est obtenue en réalisant un module capteur éolien composé d'un assemblage des éléments complémentaires monoblocs suivants :
- un socle 2 dont la périphérie comporte des ailettes directionnelles périptères 4 à profil asymétrique permettant de canaliser et d'accélérer un flux éolien,
- une turbine 1 centrale comportant des pales 6, et
- un capot de protection 3,
caractérisé en ce que chaque pale 6 de la turbine possède un profil asymétrique, de type aile d'avion, permettant un double effet de poussée et de traînée du flux éolien, et en ce que chaque ailette directionnelle périptère possède un profil asymétrique inversé par rapport au profil asymétrique des pales.

Ainsi, la turbine (1) fig 1 (coupe CD de la fig. 2) est constituée par un corps cylindrique (5) solidarisant, lors du moulage, l'ensemble périphérique de pales verticales à profil asymétrique (6) s'inspirant d'aile d'avion propice au double effet poussée et traînée. Le socle (2) fig. 2 (coupe CD de la fig. 1) possède en son centre un palier (7) dans lequel pivote l'arbre vertical de turbine (8). Par ailleurs, ce socle (2) comporte sur sa périphérie une série d'ailettes verticales (4) à profil asymétrique inversé par rapport aux pales (6) de la turbine (1) créant ainsi autant de conduits d'attaque et de fuite qui, premièrement accélèrent le flux éolien selon le principe du venturi, et deuxièmement grâce à l'effet de dépression extrados provoqué par le profil asymétrique des ailettes (4) canalisent d'autant plus le flux éolien dans le prolongement du bord de fuite de chaque ailette (4).
Par conséquent le profil inversé des ailettes (4) permet non seulement une meilleure pénétration du flux éolien dans la turbine (1) mais aussi un effet aérodynamique optimisé sur les pales (6) de la turbine (1) au point d'interaction a (dépression), ainsi que la partie rectiligne où s'exerce la pression active b (action).

Le capot (3) possède en son centre un palier auto-aligneur (9) maintenant l'arbre vertical de la turbine (8).

Par conséquent, à chaque révolution de la turbine (1), chacune des pales (6) intercepte deux effets : une action principale au point d'interaction a et une dépression sur le point b.

Les avantages d'une telle restructuration quadrimonolithique d'un module stato-éolien incluant une turbine à double effet moteur (1) sont : un rendement, une fiabilité et une compétitivité accrus.

Grâce à la conformation plate et périptère de l'appareil, nous disposons sous le socle (2) d'un carter récepteur d'énergie pouvant inclure un générateur électrique, une pompe à eau ou tout autre système énergétique.

## Revendications

1. Module Capteur Eolien composé d'un assemblage des éléments complémentaires monoblocs suivants :
• un socle (2) dont la périphérie comporte des ailettes directionnelles périptères (4) à profil asymétrique permettant de canaliser et d'accélérer un flux éolien,
• une turbine (1) centrale comportant des pales (6), et
• un capot de protection (3),
**caractérisé en ce que** chaque pale (6) de la turbine possède un profil asymétrique, de type aile d'avion, permettant un double effet de poussée et de traînée du flux éolien, et **en ce que** chaque ailette directionnelle périptère possède un profil asymétrique inversé par rapport au profil asymétrique des pales.

2. Module Capteur Eolien selon la revendication 1, **caractérisé en ce que** les ailettes directionnelles périptères (4) du socle et/ou les pales (6) de la turbine sont disposées non-radialement.

3. Module Capteur Eolien selon la revendication 1 ou 2, **caractérisé en ce que** la turbine (1) est composée d'une cage cylindrique creuse comportant un arbre axial (8) et au moins huit pales longitudinales (6) à profil asymétrique.

4. Module Capteur Eolien selon l'une des revendications 1 à 3, **caractérisé en ce que** le capot de protection est légèrement bombé.

5. Module Capteur Eolien selon l'une des revendications 1 à 4, **caractérisé en ce que** le capot de protection est circulaire et **en ce que** le centre du capot comporte un palier auto-aligneur (9) apte à maintenir axialement l'arbre de la turbine.

6. Module Capteur Eolien selon l'une des revendications 1 à 5, **caractérisé en ce que** les éléments complémentaires sont réalisés par moulage.

7. Module Capteur Eolien selon l'une des revendications 1 à 6, **caractérisé en ce que** chaque élément complémentaire est coulé d'une seule pièce.

8. Module Capteur Eolien selon l'une des revendications 1 à 7, **caractérisé en ce que** des éléments de l'assemblage notamment le socle (2), les ailettes directionnelles (4) et/ou le capot (3), forment un carénage de protection pour l'environnement.

9. Module Capteur éolien selon l'une des revendications 1 à 8, **caractérisé en ce qu'**un carter récepteur d'énergie (10) est disposé sous le socle (2).

10. Module Capteur Eolien selon la revendication 9, **caractérisé en ce que** le carter comporte un système énergétique, notamment un générateur électrique ou une pompe.

## Patentansprüche

1. Windradmodul, bestehend aus einer Zusammenstellung folgender komplementärer einstückiger Elemente:
- ein Sockel (2), dessen Umfang ringsum mit gerichteten Flügeln (4) mit asymmetrischem Profil ausgestattet ist, die es ermöglichen, einen Windstrom zu kanalisieren und zu beschleunigen,
- eine zentrale Turbine (1), ausgestattet mit Schaufeln (6), und
- eine Schutzhaube (3),
**dadurch gekennzeichnet, dass** jede Schaufel (6) der Turbine ein asymmetrisches Profil nach Art eines Flugzeugflügels hat, welches eine doppelte Wirkung in Form von Druck und Zug des Windstroms ermöglicht, und dass jeder der gerichteten, ringsum angeordneten Flügel über ein asymmetrisches Profil verfügt, welches zu dem asymmetrischen Profil der Schaufeln umgekehrt ist.

2. Windradmodul nach Anspruch 1, **dadurch gekennzeichnet, dass** die gerichteten, ringsum angeordneten Flügel (4) des Sockels und/oder die Schaufeln (6) der Turbine nichtradial angeordnet sind.

3. Windradmodul nach Anspruch 1 oder 2, **dadurch gekennzeichnet, dass** die Turbine (1) aus einem zylindrischen, hohlen Gehäuse besteht, das eine Axialwelle (8) und mindestens acht longitudinale Schaufeln (6) mit asymmetrischem Profil umfasst.

4. Windradmodul nach einem der Ansprüche 1 bis 3, **dadurch gekennzeichnet, dass** die Schutzhaube leicht gewölbt ist.

5. Windradmodul nach einem der Ansprüche 1 bis 4, **dadurch gekennzeichnet, dass** die Schutzhaube kreisförmig ist und dass das Zentrum der Haube ein selbstausrichtendes Lager (9) umfasst, das geeignet ist, die Welle der Turbine axial zu halten.

6. Windradmodul nach einem der Ansprüche 1 bis 5, **dadurch gekennzeichnet, dass** die komplementären Elemente durch Formguss hergestellt sind.

7. Windradmodul nach einem der Ansprüche 1 bis 6, **dadurch gekennzeichnet, dass** jedes der komplementären Elemente aus einem Stück gegossen ist.

8. Windradmodul nach einem der Ansprüche 1 bis 7, **dadurch gekennzeichnet, dass** die Elemente der Zusammenstellung, insbesondere der Sockel (2), die gerichteten Flügel (4) und/oder die Haube (3) eine Schutzverkleidung für die Umwelt bilden.

9. Windradmodul nach einem der Ansprüche 1 bis 8, **dadurch gekennzeichnet, dass** ein Gehäuse für einen Energieempfänger (10) unter dem Sockel (2) angeordnet ist.

10. Windradmodul nach Anspruch 9, **dadurch gekennzeichnet, dass** das Gehäuse ein Energiesystem, insbesondere einen elektrischen Generator oder eine Pumpe umfasst.

## Claims

1. Wind collector unit formed of an assembly of the following complementary one-piece elements:
- a base (2) the periphery of which includes peripteral directional vanes (4) of asymmetrical profile permitting channelling and acceleration of an air flow,
- a central turbine (1) including blades (6), and
- a protective cover (3),
**characterised by** the fact that each blade (6) of the turbine has an asymmetrical profile of aircraft wing type, permitting a double effect of thrust and drag of the air flow, and by the fact that each peripteral directional vane has a reversed asymmetrical profile relative to the asymmetrical profile of the blades.

2. Wind collector unit as described in claim 1, **characterised by** the fact that the peripteral directional vanes (4) of the base and/or the blades (6) of the turbine are arranged non-radially.

3. Wind collector unit as described in claim 1 or 2, **characterised by** the fact that the turbine (1) is formed of a hollow cylindrical cage including an axial shaft (8) and at least eight longitudinal blades (6) of asymmetrical profile.

4. Wind collector unit as described in one of claims 1 to 3, **characterised by** the fact that the protective cover is slightly convex.

5. Wind collector unit as described in one of claims 1 to 4, **characterised by** the fact that the protective cover is circular and by the fact that the centre of the cover includes a self-aligning bearing (9) able to keep the shaft of the turbine axially in position.

6. Wind collector unit as described in one of claims 1 to 5, **characterised by** the fact that the complementary elements are made by moulding.

7. Wind collector unit as described in one of claims 1 to 6, **characterised by** the fact that each complementary element is cast in one piece.

8. Wind collector unit as described in one of claims 1 to 7, **characterised by** the fact that elements of the assembly in particular the base (2), the directional vanes (4) and/or the cover (3) form an environmentally protective streamlining.

9. Wind collector unit as described in one of claims 1 to 8, **characterised by** the fact that an energy receiving casing (10) is arranged beneath the base (2).

10. Wind collector unit as described in claim 9, **characterised by** the fact that the casing includes an energy system, in particular an electrical generator or a pump.
